# EUROPEAN PATENT APPLICATION

(11) **EP 4 603 558 A1**
(43) Date of publication of application: **20.08.2025**
(21) Application number: 24158062.0
(22) Date of filing: 16.02.2024
(51) Int. Cl.: C09J 9/02, C09J 11/00, H01B 1/22, C09D 11/033, C09D 11/52

(54) **ANISOTROPICALLY CONDUCTIVE HEAT ACTIVATED ADHESIVE COMPOSITION**

(71) Applicant: Henkel AG & Co. KGaA, 40589 Düsseldorf (DE)
(72) Inventor: Taplan, Christian, 40225 Düsseldorf (DE); Goethel, Frank, 09125 Chemnitz (DE); Negele, Carla, 41472 Neuss (DE)

(57) **Abstract**

The present invention relates to an anisotropically conductive heat activated adhesive composition, comprising

a) one or more thermoplastic resin;

b) metal coated particles; and

c) a solvent selected from the group consisting of 1-methoxy-2-propanylacetate, 2-butoxyethyl acetate, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, glycol ethers and mixtures thereof, wherein the one or more thermoplastic resin is dissolved into the solvent.

The composition can be used in electronic devices.

## Description

### Technical field

The present invention relates to an anisotropically conductive heat activated adhesive composition, which can be used in electric devices.

### Technical background

Printed electronics is a set of printing methods used to create electric devices on various substrates. Electrically functional inks are deposited on the substrate, creating active or passive devices, such as thin film transistors, capacitors, coils, or resistors. Printed electronics enables the production of flexible and large-area components and complements silicon-based electronics. They are ultrathin, lightweight, robust and economical to manufacture. These key features distinguish flexible, organic and printed electronics from traditional semiconductor technologies. Printed electronics is the key to the manufacturing of a multitude of electronic components. Varying from transistors, circuits and sensors to displays, light sources, solar cells, printed antennas for radio frequency identification (RFID), wearable electronics and touch surfaces.

Ordinarily the printed electronic parts are connected to a cable, a wire, printed circuit boards (PCB) etc. systems, however, the challenge is to form a reliable and durable connection. The connection is typically formed by soldering, or electrically conductive adhesive (ECA), or anisotropically conductive adhesive tapes, or a mechanical connection e.g., using a clamp, crimp, or rivet.

In a soldering process two surfaces, for example metals, are jointed together by using a fusable metal alloy called solder. The soldering process involves heating the surfaces to be joined and melting the solder, which is then allowed to cool and solidify, and this way to create a strong and durable joint. Disadvantageous of the soldering process is that it requires high temperatures, which are detrimental to the printed electronics and/or the substrate. For example, thermoplastic urethanes (TPU) cannot be used as substrates when soldering is used to create the required connection.

In a clamping method, the connection is formed by using a mechanical clamp, crimp or rivet to join two things together. Disadvantage of this method is that the connection is only a mechanical and there is no adhesion involved, and therefore, when the clamp, crimp or rivet is removed completely or slightly dislocated, the connection is no longer reliable.

Ordinary electrically conductive adhesives (ECA) have also been also used to form a connection. ECAs are generally made of two components: the conductive filler, and the structural resin. The filler creates the conductive link across a join. Fillers are typically metal based, with the most common metal being silver. The resin provides mechanical strength to the adhesives and holds the filler particles in place. Resins are generally polymer based, such as epoxy resins. Drawbacks relating to ECAs include high costs compared with other joining technologies, primarily due to high materials (Ag concentration >80%) and processing costs.

Using anisotropically conductive adhesive tapes is a commonly used method. Ordinary tapes form a reliable and well-functioning connection; however, the connection layer is thick, and has a tacky surface and provides only moderate adhesion properties.

Therefore, there is still a need for printable adhesive material to form a reliable and durable connection between printed electronics and cable, printed circuit board (PCB), flexible circuit board (FCB), etc. systems.

### Short description of the figures

Figure 1 illustrates how the anisotropically conductive heat activated adhesive composition according to the present invention is used to form a connection between the printed electronics and wires.
Figure 2 illustrates a mechanical crimp connector, and a connection made of an anisotropically conductive heat activated adhesive according to the present invention to connect.
Figure 3 illustrates SEM image of example 1 which indicates no percolation.

### Summary of the invention

The present invention relates to an anisotropically conductive heat activated adhesive composition, comprising a) one or more thermoplastic resin; b) metal coated particles; and c) a solvent selected from the group consisting of 1-methoxy-2-propanylacetate, 2-butoxyethyl acetate, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, glycol ethers and mixtures thereof, wherein the one or more thermoplastic resin is dissolved into the solvent.

The present invention also relates to a dried product of anisotropically conductive heat activated adhesive composition according to the present invention.

The present invention encompasses use of the anisotropically conductive heat activated adhesive composition or dried product according to the present invention in electronic devices.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

By the term *"heat activated adhesive"* is meant herein an adhesive which require a defined period of time at elevated temperatures to become fully adhesive and to be able to bond with surfaces.

As used herein, room temperature is 23°C plus or minus 2°C.

As used herein, *"ambient conditions"* means the temperature and pressure of the surroundings in which the composition is located or in which a coating layer or the substrate of said coating layer is located.

By the term "substantially free" of water is meant herein that the composition comprises less than 1% by weight of the total weight of the composition water.

An *"adhesion promoter"* for the purposes of the present invention is a substance that enhances the bonding between two surfaces.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to an anisotropically conductive heat activated adhesive composition, comprising a) one or more thermoplastic resin(s); b) metal coated particles; and c) a solvent selected from the group consisting of 1-methoxy-2-propanylacetate, 2-butoxyethyl acetate, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, glycol ethers and mixtures thereof, wherein the one or more thermoplastic resin(s) is/are dissolved into the solvent.

The present invention relates to anisotropically conductive heat activated adhesive compositions, which can be printed by standard industrially relevant printing methods, such as screen printing. The heat sealable composition is subsequently dried at moderate temperatures. Upon drying the adhesive layer is thin and electrically conductive only in one direction (z-direction) as a result of an interplay of particle size and dry layer thickness, while conductivity in (x,y) direction is not given as the concentration of particles is not sufficient for them to form an isotropically conductive layer.

In comparison to ordinary electrically conductive adhesives (ECAs), the present invention provides a cost effective (less silver and thinner composition layer) and faster connection and assembly of electronic components. Comparing to soldering, or mechanical clamping, the present invention enables assembly without harsh thermal or mechanical impairment of the final device or assembled electronic structures. Further, the use of a thermoplastic resin as a main component enables the dried composition to provide reprocessing and/or heat activation and good adhesion performance after a thermal lamination or low-pressure moulding step in the device assembly process.

In comparison to currently available materials able to form a connection between printed electronics and a cable/a wire/printed circuit boards (PCB) etc., the composition according to present invention provides a non-tacky, non-sticky surface after drying. Non-sticky surface is beneficial during the production wherein the printed sheets can be stacked without sheets adhering to each other.

The anisotropically conductive heat activated adhesive composition according to the present invention is substantially free of water. There is no added water in the composition.

The anisotropically conductive heat activated adhesive composition according to the present invention comprises one or more thermoplastic resin. The thermoplastic resin adheres the composition to the substrate and binds the electrically conductive particles together while ensures the mechanical and chemical stability.

The thermoplastic resin is preferably selected from the group consisting of an aliphatic thermoplastic polyurethane, an aromatic thermoplastic polyurethane, phenoxy resin, and mixtures thereof, preferably the thermoplastic resin is an aliphatic thermoplastic polyurethane or an aromatic thermoplastic polyurethane and mixtures thereof.

The components of the thermoplastic polyurethane are selected in a way, that preferably linear polyurethanes are obtained. In order to obtain a TPU which is essentially free of NCO groups, the amount of the NCO groups (equivalents) in the one or more isocyanate is selected to be smaller than the amount (equivalents) of reactive OH, NH, COOH groups of the polyester polyols.

Suitable polyester for thermoplastic polyurethane shall contain at least two hydroxyl groups. The properties of the polyester can be designed by the different components. For example, a single linear aliphatic diol and a linear aliphatic diacid will tend to provide semi-crystalline polymers. Increasing melting point can be obtained by increasing the length of the carbon chain in the diacid or by using symmetrical aromatic diacids. More amorphous materials can be obtained by increasing the number of comonomers or incorporating branched aliphatic comonomers.

Suitable polyester polyols for thermoplastic polyurethane are formed through the condensation of one or more polyhydric alcohols having from 2 to 30 carbon atoms with one or more polycarboxylic acids having from 2 to 14 carbon atoms. Suitable polyols include alkylene diols, in particular linear alcohols with 2 to 30 C atoms, which exhibit up to four, preferably two OH groups; glycol ethers; and alicyclic polyols.

Examples of suitable polyols for thermoplastic polyurethane include ethylene glycol, propylene glycol such as 1,2-propylene glycol and 1,3-propylene glycol, glycerol, pentaerythritol, trimethylolpropane, butanediol, pentanediol, hexanediol, dodecanediol, octanediol, chloropentanediol, glycerol monoallyl ether, glycerol monoethyl ether, diethylene glycol, 2-ethylhexanediol, 1,4-cyclohexanediol, 1,2,6-hexanetriol, 1,3,5- hexanetriol, 1,3-bis-(2-hydroxyethoxy)propane. The polyols can be used separately or in mixture. The polyols preferably have a molecular weight from 100 to 750 g/mol, their functionality is preferably 2 or 3.

In a highly preferred embodiment, polyols are selected from the group consisting of butanediol, hexanediol, and mixtures thereof.

Examples of polycarboxylic acids for thermoplastic polyurethane include ortho-phthalic acid, isophthalic acid, terephthalic acid, tetrachlorophthalic acid, maleic acid, dodecylmaleic acid, octadecenylmaleic acid, fumaric acid, aconitic acid, trimellitic acid, tricarballylic acid, 3,3'-thiodipropionic acid, succinic acid, adipic acid, suberic acid, azelaic acid, malonic acid, glutaric acid, pimelic acid, sebacic acid, cyclohexane-1,2-dicarboxylic acid, 1,4-cyclohexadiene-1,2-dicarboxylic acid, 3-methyl-3,5-cyclohexadiene-1 ,2-dicarboxylic acid and the corresponding acid anhydrides, acid chlorides and acid esters such as phthalic anhydride, phthaloyl chloride and the dimethyl ester of phthalic acid.

In a highly preferred embodiment, polycarboxylic acid is adipic acid.

Further suitable polyester polyols for thermoplastic polyurethane are polycarbonate polyols. Polycarbonate polyols can be received for example by the reaction from diols, like propylene glycol, 1,4-butanediol or 1,6-hexenediol, diethyleneglycol, triethyleneglycol or mixtures from two or more from it with diarylcarbonates. Polyesters on the basis of ε- caprolactone are also suitable. Polyester polyols are also suitable, which contain one or more urethane groups in the polymer chain. Other useful polyester polyols for TPUs include e.g., polyols derived from oleochemicals, and the complete ring opening of epoxidized triglycerides of an at least partially olefinic unsaturated fatty acid-containing fat mixture and at least one alcohol containing from 1 carbon atom to 12 carbon atoms, followed by partial transesterification of the triglyceride derivatives to form alkyl ester polyols having from 1 carbon atom to 12 carbon atoms in the alkyl chain.

Commercially available polyester polyols which may be used in the practice of the invention for thermoplastic polyurethane include semi-crystalline or non-crystalline polyesters.

Preferred polycarboxylic acids are the aliphatic and cycloaliphatic dicarboxylic acids containing no more than 14 carbon atoms and the aromatic dicarboxylic acids containing no more than 14 atoms.

Suitable monomeric isocyanates to be used in the synthesis for thermoplastic polyurethane are preferably isocyanates which contain two orthree NCO groups. They include aliphatic, cyclo-aliphatic or aromatic monomeric diisocyanates, preferably aromatic diisocyanates. Preferably isocyanates are selected with a molecular weight from 160 g/mol to 500 g/mol.

Suitable aromatic diisocyanates are for example 4,4'- diphenylmethanediisocyanate (MDI), 2,2'-diphenylmethane diisocyanate, diphenyl methane 2,4'- diisocyanate, 1,3-phenylenediisocyanate, 1,4-phenylenediisocyanate, naphthalene-1,5-diisocyanate (NDI), toluenediisocyanate (TDI), tetramethyl xylylene diisocyanate, toluene diisocyanate, naphthalene, di- and tetraalkyl diphenylmethane diisocyanate, 4,4'-dibenzyl diisocyanate, and mixtures thereof.

In a highly preferred embodiment, the aromatic diisocyanate is selected from the group consisting of 4,4'- diphenylmethanediisocyanate (MDI), toluenediisocyanate (TDI) and mixtures thereof.

Aliphatic diisocyanates such as dodecane diisocyanate, dimer fatty acid diisocyanate, 4,4'-dibenzyldiisocyanate, 1,6-diisocyanato-2,2,4-trimethylhexane, butane-1,4-diisocyanate, hexane-1,6 diisocyanate (HDI), tetramethoxybutane-1,4-diisocyanate, dicyclohexylmethanediisocyanate, 1,12-diisocyanato-dodecane, cyclic diisocyanates such as 4,4-dicyclohexylmethanediisocyanate, 1,3-cyclohexane or 1,4-cyclohaxene diisocyanate, 1-methyl-2,4-diisocyanate-cyclohexane, 1-isocyanatomethyl-3-isocyanato-1,5,5-trimethylcyclohexane (isophorone diisocyanate, IPDI), hydrogenated or partly hydrogenated MDI ([H]12MDI (hydrogenated) or [H]6MDI (partly hydrogenated)), xylylenediisocyanate (XDI), tetramethyl-xylylenediisocyanate (TMXDI), di- and tetraalkylenediphenylmethane-diisocyanate may also be used.

Mixtures of aliphatic or aromatic diisocyanates may also be used.

Suitable phenoxy resins (polyhydroxyether resins) for use in the present invention are for example PKHC, PKHH, PKHC and mixtures thereof.

The use of one or more thermoplastic resin as a main component enables the dried composition to provide reprocessing and/or heat activation and good adhesion performance after a thermal lamination or low-pressure moulding step in the device assembly process.

Suitable commercially available thermoplastic polyurethanes for use in the present invention include but are not limited to IROSTIC S8612-12 and IROSTIC S8612-1.6 from Huntsman International LLC. and Pearlstick 5703, and 5715 from Lubrizol.

The thermoplastic resin may be present in an amount from 5 to 50% by weight of the total weight of the composition, preferably from 10 to 40%, more preferably from 12 to 30% and even more preferably from 15 to 25%.

The above defined quantities are preferred, because too low quantity of the resin, less than 5%, may lead to poor adhesion of the anisotropically conductive heat activated adhesive composition to a substrate, whereas too high quantity, more than 50% may lead to too high viscosity of the composition.

The thermoplastic resin according to the present invention is fully dissolved into the solvent. It is highlighted that the solvent and the thermoplastic resin do not form an emulsion.

The anisotropically conductive heat activated adhesive composition according to the present invention comprises metal coated particles. The metal coated particles provide the electrical conductivity to the adhesive.

Preferably the metal coated particles are selected from the group consisting of silver coated metal particles, silver coated polymer particles, silver coated glass beads, gold coated metal particles, gold coated polymer particles, gold coated glass beads, nickel coated polymer particles, and mixtures thereof, preferably the metal coated particles are silver coated polymer particles.

Silver coated polymer particles are preferred because of their small particle sizes and comparably narrow particle size distribution compared to other silver metal particles, such as flake shaped silver particles.

Examples of metal particles coated with silver or gold are copper, nickel and aluminium. In addition, silver or gold coated silicon carbide particles and ferrite particles may be used.

Examples of polymer particles coated with silver or gold are acrylic polymers, polymethyl methylacrylate, polystyrene, and cross-linked styrene.

In a highly preferred embodiment, the metal coated particles are silver coated polymer particles, more especially silver coated polymethyl methacrylate particles.

Suitable metal coated particles for use in the present invention have a particle size from 5 to 20µm, preferably from 6 to 16µm and more preferably from 7 to 13µm, wherein the particle size is measured by laser diffractometry.

As used above, the term "particle size" in context with metal coated particles refers to the D₉₀ value of the cumulative volume distribution curve at which 90% by volume of the particles have a diameter less than said value. The average particle size is measured in the present invention through laser diffractometry preferably using Microtrac S3000/S3500 available from Microtrac MRB. In this technique, the size of particles in suspensions or emulsions is measured using the diffraction of a laser beam, based on application of Mie theory. In the present invention, Mie theory or a modified Mie theory for non-spherical particles is applied and the particle sizes relate to scattering measurements at an angle from 0.02 to 135 degrees relative to the incident laser beam.

Metal coated particles preferably have narrow particle size distribution. Preferably the size difference between D50 and D90 is equal or less than 2µm.

Narrow particle size distribution ensures even thickness for the adhesive layer and all particles are touching top and bottom of the adhesive layer and therefore, good conductivity is provided. Further, narrow particle size distribution provides better adhesion properties.

Suitable commercially available metal coated particles for use in the present invention include but are not limited to Conduct-O-Fil particles from Potters Industries LLC.

The metal coated particles may be present in an amount from 0.1 to 18% by weight of the total weight of the composition, preferably from 0.2 to 13%, more preferably from 0.3 to 8% and even more preferably from 0.5 to 3%.

The above defined quantities are preferred, because too low quantity of the metal coated particles, less than 0.1%, may lead to poor conductivity of the anisotropically conductive heat activated adhesive composition to a substrate, whereas too high quantity, more than 18% may lead to loss of anisotropic conductivity.

The anisotropically conductive heat activated adhesive composition comprises a solvent. The solvent dissolves the resin completely without forming an emulsion and ensures the adequate printing and drying behaviour.

Suitable solvent for use in the present invention is selected from the group consisting of 1-methoxy-2-propanylacetate, 2-butoxyethyl acetate, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, glycol ethers and mixtures thereof.

Above mentioned solvents are preferred because they dissolve the resin completely, without forming an emulsion. Further, they are not harmful and allow sufficient opening times on the screen and are easily released during the drying process.

In a highly preferred embodiment, the solvent is 1-methoxy-2-propanylacetate.

It is noted that particularly suitable solvents for screen printing are selected from the group consisting of 2- butoxyethyl acetate, 2-butoxyethanol, 2-(2-butoxyethoxy)ethanol, [2-(2-butoxyethoxy)-ethyl]acetate, dimethyl succinate, dimethyl glutarate, dimethyl adipate, acetic acid, dipropylene glycol (mono)methyl ether, glycol ethers and mixtures thereof, preferably selected from 2-butoxyethyl acetate, 2-butoxyethanol, dibasic esters and mixtures thereof.

Further it is noted that particularly suitable solvents for high-speed printing are selected from the group consisting of ethanol, isopropyl alcohol, n-propanol, ethoxy propanol, ethyl acetate, butyl acetate, n-propyl acetate, isopropyl acetate, 2-butoxyethyl acetate, 1-methoxypropan-2-ol, 1-methoxy-2-propylacetate, methyl ethyl ketone, methyl isobutyl ketone and mixtures thereof, preferably selected from n-propyl acetate, butyl acetate, 1-methoxypropan-2-ol, 1-methoxy-2-propylacetate and mixtures thereof.

Suitable commercially available solvents for use in the present invention include but are not limited to 1-methoxy-2-propanyl acetate from Alfa Aesar and 2-butoxyethyl acetate from DOW.

The solvent may be present in an amount from 30 to 90% by weight of the total weight of the composition, preferably from 50 to 84%, preferably from 70 to 83%.

These solvent quantities are preferred because if the solvent quantity is below 30% the viscosity of the adhesive may be too high and the adhesive may not be suitable for printing, whereas, if the solvent quantity is more than 90% the viscosity may be too low, and the printing quality may decrease as well as the resulting dry layer thickness may be too low affecting to effectively heat seal the assembly.

The anisotropically conductive heat activated adhesive composition may further comprise an adhesion promoter.

Exemplary adhesion promoters for use in the present invention include but are not limited to: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); phosphoric acid derivatives such as 2-hydroxyethyl methacrylate phosphate and, citric acid (2-hydroxypropane-1 ,2,3-tricarboxylic acid).

Suitable commercially available adhesion promoters for use in the present invention include but are not limited to VISIOMER^{®} HEMA-P and Dynasylan 1124 from Evonik, and SR9050 from Arkema.

The adhesion promoter may be present in an amount from 0.1 to 5% by weight of the total weight of the composition.

These adhesion promoter quantities are preferred because if the adhesion promoter quantity is below 0.1% there may not be any technical effect, whereas, if the adhesion promoter quantity is more than 5% it may not give any better technical performance on adhesion properties, however, it may negatively impact on the overall performance of the adhesive composition.

The anisotropically conductive heat activated adhesive composition may further comprise an inorganic filler. The optional inorganic filler may provide improved cohesion, and ink rheology to the composition.

Preferably, the inorganic filler may be selected from the group consisting of silica, fumed silica, diatomaceous earth, alumina, zinc oxide, iron oxide, magnesium oxide, tin oxide, titanium oxide, barium sulphate, gypsum, calcium silicate, talc, glass bead, sericite activated white earth, bentonite, aluminium nitride, silicon nitride, magnesia dihydroxide, alumina trihydroxide, bariumsulfat, chalk, wollastonites and mixtures thereof.

Suitable commercially available inorganic fillers for use in the present invention include but are not limited to JetFine^{®} 2 from Imerys and CAB-O-SIL-M5 from Cabot Corporation.

The inorganic filler may be present in an amount from 0.1 to 20% by weight of the total weight of the composition.

These inorganic filler quantities are preferred because if the inorganic filler quantity is below 0.1% there may not be any technical effect, whereas, if the inorganic filler quantity is more than 20% the composition may become too brittle, and it may lose peel strength/adhesion to the substrates.

The anisotropically conductive heat activated adhesive composition according to the present invention may be prepared by mixing all components together.

In one embodiment the anisotropically conductive heat activated adhesive composition is prepared in a process comprising following steps: 1) the thermoplastic resin is dissolved in the respective solvent(s); 2) any optional components, such as inorganic fillers and/or adhesion promoter are added into the mixture; 3) the mixture is mixed thoroughly, and in an event that inorganic fillers are present, the composition is triple roll milled; 4) metal coated particles are added; and 5) the composition is mixed thoroughly.

The anisotropically conductive heat activated adhesive composition according to the present invention may be applied onto a substrate by screen printing, bar coating, flexographic printing, gravure printing, stencil printing, gravure coating, spray coating, and dispensing, preferably the composition is applied onto a substrate by screen printing.

Screen printing is preferred application method because it creates fairly high material deposition and ink volume ratio.

Once the anisotropically conductive heat activated adhesive composition according to the present invention is printed on to a surface of a substrate, the composition is dried. The drying is carried out at a temperature no greater than about 160° C for a time in the range of from one minute up to about 2 hours.

The present invention also relates to a dried product of anisotropically conductive heat activated adhesive composition according to the present invention.

The drying is carried out at a temperature no greater than about 160° C for a time in the range of from one minute up to about 2 hours. The drying may happen in a box oven, a belt oven or IR or NIR heater etc.

The surface of the anisotropically conductive heat activated adhesive composition according to the present invention after the drying is non-tacky and non-sticky.

The anisotropically conductive heat activated adhesive composition or the dried product according to the present invention can be used in electronic devices.

Non-limiting examples of uses are connecting printed circuit boards (PCBs) with flexible printed circuits (FPCs) and use in smart cards.

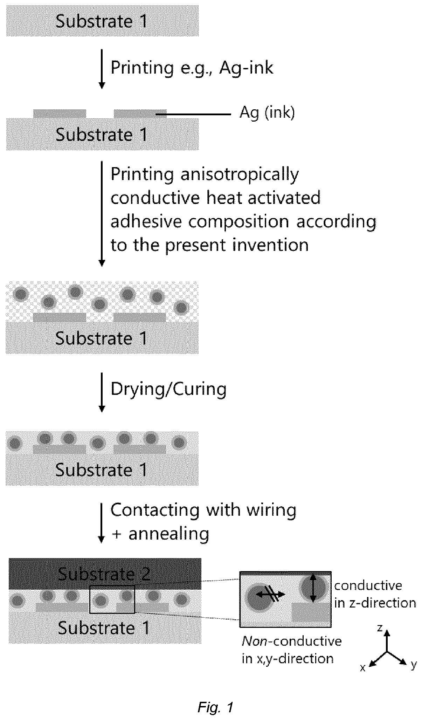

Figure 1 illustrates how the anisotropically conductive heat activated adhesive composition according to the present invention is used to form a connection between the printed electronics and wires. An electrically conductive composition, such as silver-ink is printed onto a surface of a substrate at first, subsequently the anisotropically conductive heat activated adhesive composition according to the present invention is printed onto a substrate to form a connection. In the final step the anisotropically conductive heat activated adhesive composition according to the present invention is brought to a contact with wiring and annealed to form the complete connection, having conductivity only in z-direction.

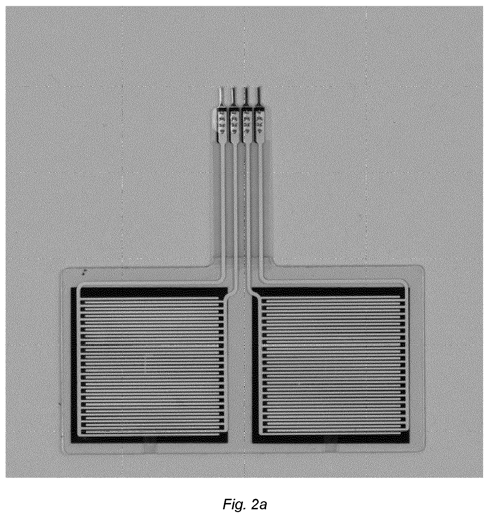

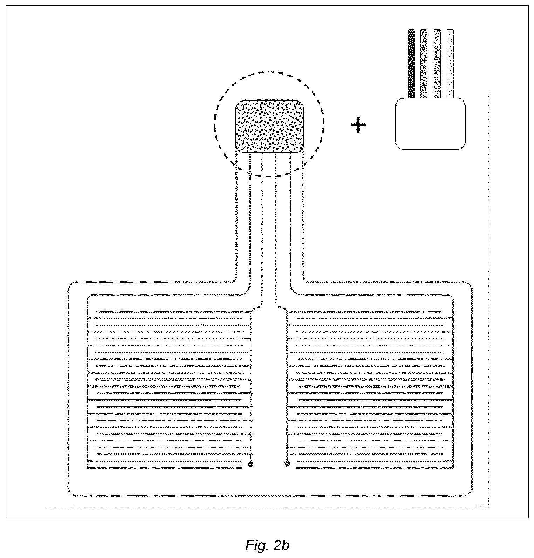

Figure 2a illustrates a resistive force sensor containing a state-of-the-art mechanical crimp connector, whereas Figure 2b illustrates resistive force sensor with an anisotropically conductive heat activated adhesive according to the present invention to connect with pad containing wires.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.

### Example 1

Anisotropically conductive heat activated adhesive composition was prepared in accordance with Table 1 herein below:

**Table 1**

| Component | Wt.% |
|---|---|
| IROSTIC S861212-12 from Huntsman | 10 |
| IROSTIC S861212-1.6 from Huntsman | 10 |
| 1-methoxy-2-propanyl acetate from Alfa Aesar | 79 |
| Ag-coated polymer particles SP06S60 from Potters Industries LLC | 1 |

The composition was prepared accordingly, and screen printed with screen mesh 250 (mesh/inch), EOM 12µm onto PET CUS5 MacDermid substrate.

The printed layer was dried at 120°C for 10 minutes and resulting layer had a thickness of 5µm.

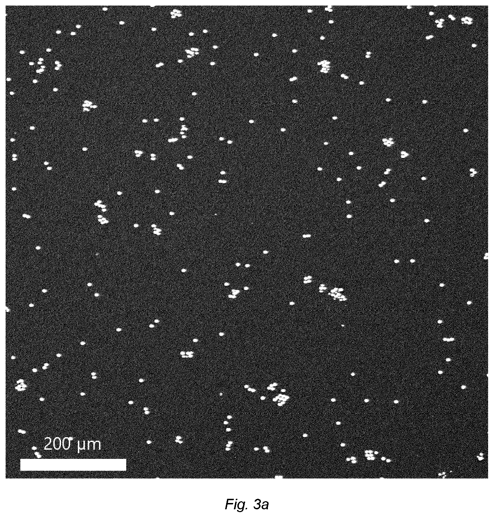

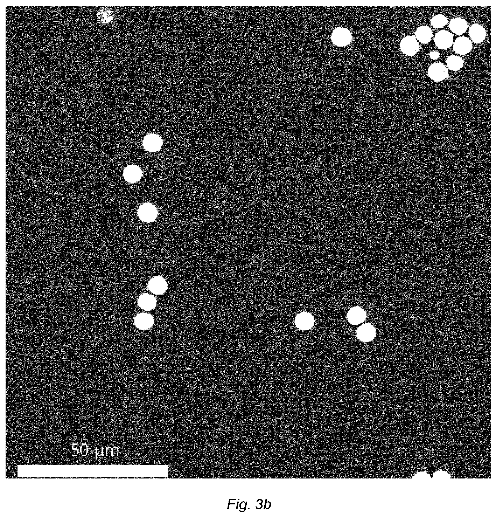

Good printability was obtained via screen printing with minimal contact resistance in a similar range of regular printed silver track resistance. Additional SEM images (Figure 3a is 200µm image and Figure 3b is 50µm image) were taken and they illustrate no percolation. The printed layer had a non-tacky surface after drying.

Peel strength of the laminates was measured. Lamination was done by applying 5kN for 1min at 120°C. Peel strength was measured at 90° angle with peel speed 300mm/min.
Peel strength: 8.13+/-1.35 N

### Example 2

Anisotropically conductive heat activated adhesive composition was prepared in accordance with Table 2 herein below:

**Table 2**

| Component | Wt.% |
|---|---|
| IROSTIC S861212-12 from Huntsman | 20 |
| 1-methoxy-2-propanyl acetate from Alfa Aesar | 79 |
| Ag-coated polymer particles SP06S60 from Potters Industries LLC | 1 |

The composition was prepared accordingly, and screen printed with screen mesh 250 (mesh/inch), EOM 12µm onto PET CUS5 MacDermid substrate.

The printed layer was dried at 120°C for 10min and resulting layer had a thickness of 5µm.

Good printability was obtained via screen printing with minimal contact resistance in a similar range of regular printed silver track resistance. The printed layer had a non-tacky surface after drying.

Peel strength of the laminates was measured. Lamination was done by applying 5kN for 1min at 120°C. Peel strength was measured at 90° angle with peel speed 300mm/min.
Peel strength: 5.66+/-1.41 N

### Comparative example

Anisotropically conductive tape from 3M (9703) was tested. 9703 is a double-sided PSA transfer tape comprising electrically conductive particles.

9703 has a thickness of 50µm and has a tacky surface upon drying.

## Claims

1. An anisotropically conductive heat activated adhesive composition, comprising
a) one or more thermoplastic resin;
b) metal coated particles; and
c) a solvent selected from the group consisting of 1-methoxy-2-propanylacetate, 2-butoxyethyl acetate, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetat, dipropylene glycol (mono)methyl ether, toluene, ethanol, isopropyl alcohol, n-propanol, ethoxy propanol, ethyl acetate, butyl acetate, n-propyl acetate, isopropyl acetate, methyl ethyl ketone, methyl isobutyl ketone, glycol ethers and mixtures thereof,
wherein the one or more thermoplastic resin is dissolved into the solvent.

2. The anisotropically conductive heat activated adhesive composition according to claim 1, wherein the thermoplastic resin is selected from the group consisting of an aliphatic thermoplastic polyurethane, an aromatic thermoplastic polyurethane, phenoxy resin, and mixtures thereof, preferably the thermoplastic resin is an aliphatic thermoplastic polyurethane or an aromatic thermoplastic polyurethane and mixtures thereof.

3. The anisotropically conductive heat activated adhesive composition according to claim 1 or 2, wherein the thermoplastic resin is present in an amount from 5 to 50% by weight of the total weight of the composition, preferably from 10 to 40%, more preferably from 12 to 30% and even more preferably from 15 to 25%.

4. The anisotropically conductive heat activated adhesive composition according to any of claims 1 to 3, wherein the metal coated particles are selected from the group consisting of silver coated metal particles, silver coated polymer particles, silver coated glass beads, gold coated metal particles, gold coated polymer particles, gold coated glass beads, nickel coated polymer particles, and mixtures thereof, preferably the metal coated particles are silver coated polymer particles.

5. The anisotropically conductive heat activated adhesive composition according to any of claims 1 to 4, wherein the silver coated particles are present in an amount from 0.1 to 18% by weight of the total weight of the composition, preferably from 0.2 to 13%, more preferably from 0.3 to 8% and even more preferably from 0.5 to 3%.

6. The anisotropically conductive heat activated adhesive composition according to any of claims 1 to 5, wherein the silver coated particles have a particle size from 5 to 20µm, preferably from 6 to 16µm and more preferably from 7 to 13µm, wherein the particle size is measured by laser diffractometry.

7. The anisotropically conductive heat activated adhesive composition according to any of claims 1 to 6, wherein the solvent is 1-methoxy-2-propanylacetate.

8. The anisotropically conductive heat activated adhesive composition according to any of claims 1 to 7, wherein the solvent is present in an amount from 30 to 90% by weight of the total weight of the composition, preferably from 50 to 84%, preferably from 70 to 83%.

9. The anisotropically conductive heat activated adhesive composition according to any of claims 1 to 8, wherein the composition further comprises an adhesion promoter, preferably in an amount from 0.1 to 5% by weight of the total weight of the composition.

10. The anisotropically conductive heat activated adhesive composition according to any of claims 1 to 9, wherein the composition further comprises an inorganic filler, preferably in an amount from 0.1 to 20% by weight of the total weight of the composition.

11. The anisotropically conductive heat activated adhesive composition according to any of claims 1 to 10, wherein the composition is applied onto a substrate by screen printing, bar coating, flexographic printing, gravure printing, stencil printing, gravure coating, spray coating, and dispensing, preferably the composition is applied onto a substrate by screen printing.

12. Dried product of anisotropically conductive heat activated adhesive composition according to any of claims 1 to 11.

13. Use of the anisotropically conductive heat activated adhesive composition according to any of claims 1 to 11 or dried product according to claim 12 in electronic devices.
